Europäisches Patentamt

European Patent Office

Office européen des brevets

(19)

(11) Publication number: **0 178 136**
**A2**

(12) # EUROPEAN PATENT APPLICATION

(21) Application number: **85307140.5**

(22) Date of filing: **04.10.85**

(51) Int. Cl.⁴: **F 16 J 12/00**

(30) Priority: **12.10.84 GB 8425818**

(43) Date of publication of application: **16.04.86**
**Bulletin 86/16**

(84) Designated Contracting States: **AT BE CH DE FR GB IT LI LU NL SE**

(71) Applicant: **WHITLAM HOLDINGS LIMITED, Low Valley Industrial Estate Low Valley, Wombwell Barnsley, S73 8AG (GB)**

(72) Inventor: **Richards, Alwyn Hugh, West Wing Cranford Hall Doncaster Road, Ardsley Barnsley South Yorkshire (GB)**

(74) Representative: **Geldard, David Guthrie et al, URQUHART-DYKES AND LORD 11th Floor, Tower House Merrion Way, Leeds, LS2 8PB West Yorkshire (GB)**

(54) **Pressure vessel.**

(57) A portable pressure valve in the form of a welded steel tank having four upright substantially planar side walls (1 to 4) welded together at adjacent edges to form an assembly that is rectangular in horizontal cross-section. Top and bottom walls (5, 7) are welded to the side walls, a relief valve (11) is mounted on the top wall and a discharge valve (25) is mounted on the bottom wall. A steel frame comprises an upright (26 to 29) at each of the four junctions between adjacent side wall edges and a reinforcing structure (e.g. 36, 41, 47, 48, 49) for each side wall is welded to and extends between each pair of uprights and is also welded to the respective side wall, in order to give to the wall the strength necessary to withstand the expected pressures. Reinforcing structures are associated with the top and bottom walls for the same purpose. Base members are welded at the feet of the uprights and provide a horizontal base plane for the assembly.

ACTORUM AG

## PRESSURE VESSEL

This invention relates to portable pressure vessels.

Off-shore oil exploration and production sites require a number of chemicals to be supplied thereto, many of which are dangerous and which need to be shipped in pressure vessels meeting the requirements of both IMDG (International Maritime Dangerous Goods) and IMO (International Maritime Organisation) code Type 1 tanks for the carriage of liquid dangerous goods in ships. Such tanks are defined as having a capacity of 450 litres or above with a working pressure of not less than 1.724 bar for liquids. There is little difficulty in manufacturing tanks in accordance with this standard, and the usual approach is to fabricate conventional cylindrical pressure vessels and to weld or bolt these into a cradle formed within a welded steel structure forming a reinforced open sided box. To accommodate a tank with a capacity of 2273 litres (500 imperial gallons) a typical box will present base dimensions of some 215 cm by 190 cm.

One of the major problems on off-shore installations is the lack of deck storage space, and indeed this is also a problem on supply ships. The object of the invention is to provide a portable pressure vessel that can be fabricated to IMDG and IMO code Type 1 standards and that will occupy significantly less floor area than the vessels now conventionally used, without sacrificing stability.

According to the invention a portable pressure vessel comprises a welded steel tank having four upright substantially planar side walls welded together at adjacent edges, a top wall welded to the side walls at the top thereof and a bottom wall welded to the side walls at the bottom thereof, the tank being devoid of internal reinforcement; a relief valve mounted on the top wall; a discharge valve mounted on the bottom wall; and a welded steel frame lying externally of the tank, the frame having a base structure providing a substantially horizontal base plane for the assembly, four uprights each welded to the base structure and extending upwardly therefrom adjacent to the junctions between respective side walls of the tank, top members welded between each adjacent pair of uprights, four side reinforcing structures, one associated with each side wall and each lying between a respective adjacent pair of uprights and being welded to those uprights and to the respective side wall, a top reinforcing structure welded to the top wall of the tank and a bottom reinforcing structure welded to the bottom wall of the tank, the welded connection between each of the side, top and bottom reinforcing structures of the frame and its associated tank wall being capable of withstanding overpressure and underpressure within the tank to prevent substantial bowing of the associated wall under either condition.

By fabricating the tank to be of rectangular cross-section with substantially planar side walls, rather than of cylindrical cross-section, the reinforcing steel frame can match very much more closely the actual tank dimensions. The result of this is that a tank having a 2273 litres (500 imperial gallon capacity) can be fabricated within a steel box construction that presents base dimensions of 142.8 cm square. The floor area of such a tank is 2.04 $m^2$, that is exactly half the floor area of 4.08 $m^2$ required by the prior art tank referred to above. The importance of this saving in floor area cannot be overstated. Obviously the detailed figures given in the preceding discussion apply to a specific example only, but stated quite generally, use of the principles on which the invention is based leads to significantly reduced floor area. The use of substantially planar side walls for pressure vessels is an important departure from conventional practice but provision of a frame that embodies a proper reinforcing structure for each of the six walls of the tank, each structure being suitably welded to its respective wall surprisingly enables the IMDG and IMO code Type 1 standard to be met.

Preferably there is no direct welded connection between the four uprights and the side walls of the tank. It is found that the required strength can be obtained without welding in this region, which eases the tolerances for both the tank and the reinforcing structure.

The reinforcing structure associated with each of the walls may take any one of a number of configurations that will give the required reinforcement to that wall in order to enable it to withstand overpressure or underpressure within the tank. The currently preferred configuration is for each side reinforcing structure to comprise upper and lower cross members welded between each adjacent pair of uprights and welded to the respective side wall, together with a number of reinforcing bars welded between each pair of upper and lower cross members and also welded to the respective side wall.

Preferably the top reinforcing structure comprises further cross members above and sustantially parallel to upper cross members of the side reinforcing structures and welded between adjacent pairs of uprights, elements at each of two opposite sides of the vessel extending between the further and the upper cross members at that side of the vessel, and a reinforcement arrangement extending over the top wall and welded between said elements and to the top wall.

Conveniently the bottom reinforcing structure comprises members welded between the bottom wall of the tank and the base structure of the frame.

Although the top and bottom walls of the tank could be curved, it is preferable that these be substantially flat in order to reduce the height of the tank. However, rather than be exactly flat the top wall may be formed of a first plane horizontal section and a second plane section sloping somewhat downwardly away from the first section in order to assist drainage of rain and sea water from the top of the tank, and clearance of any chemicals that may be spilt whilst filling the tank. Similarly, the bottom wall may desirably be sloped somewhat downwardly towards the discharge valve, or have plane parts that slope downwardly towards such valve when mounted in a central area of the wall, in order to assist in total drainage of the contents.

In order that the invention may be better understood a specific embodiment of a pressure vessel in accordance therewith will now be described in more detail, by way of example only, with reference to the accompanying drawings in which:-

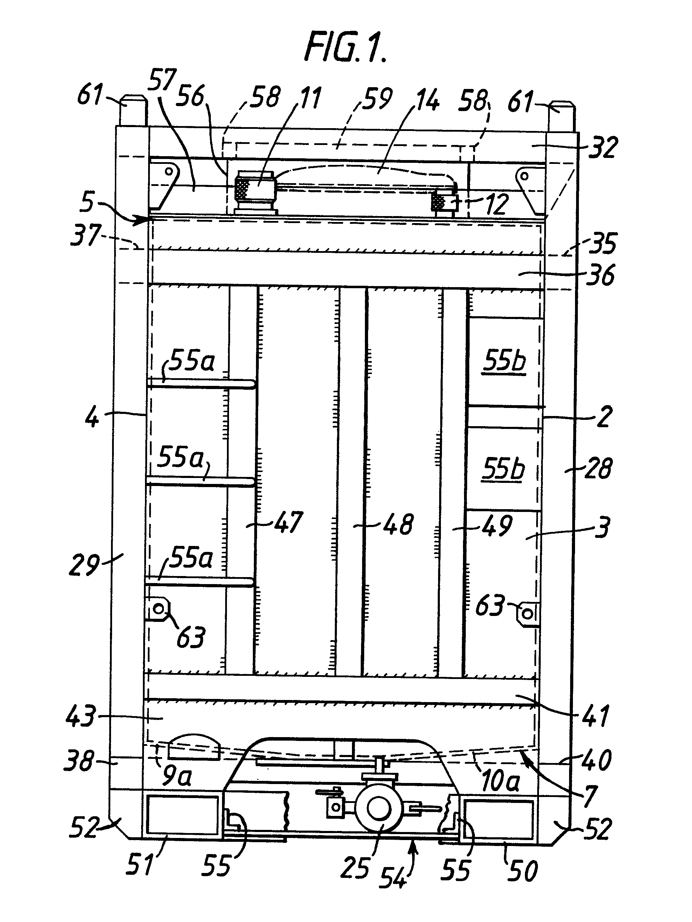

Figure 1 is a front elevation of the vessel;

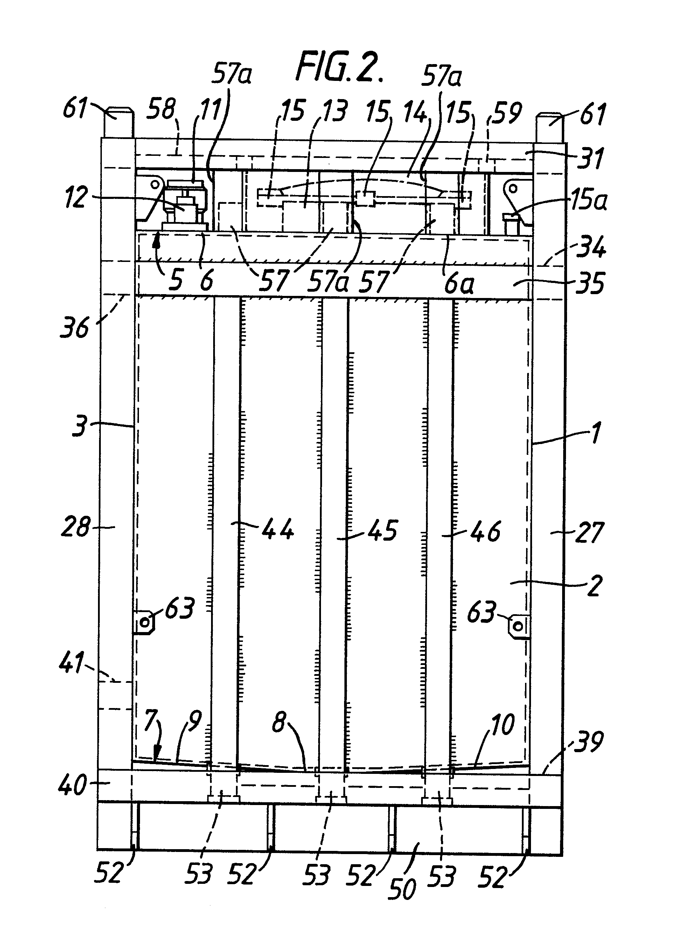

Figure 2 is a side elevation of the vessel;

Figure 3 is a top plan view of the vessel; and,

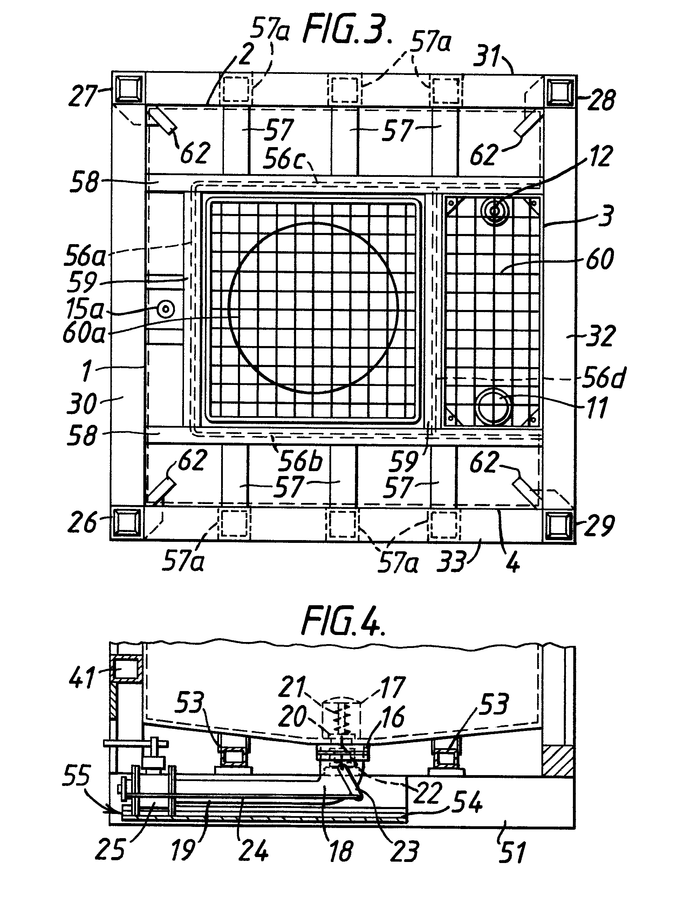

Figure 4 is a side view of the lower part of the vessel, with parts thereof removed.

Referring now to the drawings the pressure vessel comprises a welded steel tank having four upright substantially planar side walls 1 to 4, each formed from a single steel sheet, welded together at their adjacent edges to form an assembly that is rectangular in horizontal cross-section. A top wall 5 is welded to the side walls at the top of the assembly, the top wall having a horizontal section 6 and a further plane section 6a that slopes downwardly from the section 6 at an angle of some 2 to 3° to the horizontal in order to facilitate drainage from the top wall. A bottom wall 7 is welded to the side walls at the bottom of the assembly, the bottom wall having a central horizontal square section 8 and plane side sections 9, 9a and 10, 10a sloping downwardly towards the central section 8 from the respective side walls 1, 2, 3 and 4 to form an inverted truncated pyramid shape. The top wall 6 is fitted with two pressure and vacuum relief valves, a large valve 11 designed for fast relief of the full overpressure in an emergency situation, and a smaller, poppet valve 12 having a manual bleed button to assist in filling and emptying the tank. A manhole entry 13 into the tank is also welded to the top wall, and is covered by a cover 14 secured by suitable fastenings 15. The top wall is also provided with a dip stick valve 15a if required. All the described fittings may be standard items conforming to the requirements of IMDG and IMO codes Type 1.

A flange 16 is welded adjacent to an opening in the central section 8 in the bottom wall 7, the flange carrying a discharge valve assembly 17 located within the tank. Coupled to the flange 16 is a bend 18, to which is coupled an outlet pipe 19. The valve incorporates a valve member 20 that is downwardly loaded by a compression spring 21 and that is openable by a finger 22 in contact with, but not secured to, the valve member 20. The finger is carried by a lever 23 connected by a rod 24 to a handle (not shown) that may be pulled to open the valve and to hold it open against the spring 21. On return of the handle, the spring assists in ensuring rapid closure of the valve, important in an emergency situation. The outlet pipe 19 may be relief cut around its circumference below the valve, enabling it to be broken away in an accident, together with the valve operating mechanism, while leaving the valve closed to seal the liquid within the tank. An additional valve 25 is located at the outlet end of pipe 19.

The vessel also includes a welded steel frame which incorporates four hollow section uprights 26 to 29, one upright being located adjacent to each of the four junctions between adjacent side wall edges. Welded between the uprights at the top of the vessel are hollow section cross members 30 to 33. Below these cross members are a further set of hollow section cross members 34 to 37 welded to and extending between respective pairs of uprights, and each fully fillet welded to a respective side wall of the tank. Lying below the cross members 34, 35 and 37 are additional hollow section cross members 39, 40, 38 respectively at the bottom of the tank, and below the cross member 36 is a hollow section bottom cross member 41. Again, each of these cross members is welded between the two respective uprights and also fully fillet welded to the respective side wall of the tank. Cross member 41 is positioned at a higher level than the other cross members in order not to interfere with the discharge arrangement from the tank, and protection below the cross member 41 is afforded by a plate 43 welded to the cross member and to the uprights. On each side of the tank three vertical reinforcing bars extend between the lowermost cross member and that immediately above it, each bar being welded to both cross members and also fully fillet welded to the side wall of the tank. For example, side wall 2 has associated vertical reinforcing bars 44 to 46 extending between cross members 35 and 40, while side wall 3 has associated vertical reinforcing bars 47 to 49 extending between cross members 36 and 41.

At the bottom of the vessel the feet of the uprights are welded to the cross members 38, 40, which in turn are each joined to a respective one of one of two hollow steel sections 50, 51 by welded fillet plates 52. The lower surfaces of sections 50 and 51 provide a horizontal base plane for the assembly. The sections 50 and 51 are each such that a tine of a fork lift truck may be inserted therein, so enabling the vessel to be handled by such vehicle. Supports 53 for the bottom wall of the vessel are welded to that wall and to respective uprights 44 to 46 and corresponding uprights at the other side of the vessel. The discharge valve assembly is protected by a plate 54 bolted to two angle sections 55 which in turn are welded to the sections 50, 51 respectively.

Bars 55a may be welded between upright 29 and member 47 in order to provide ladder-type access to the top of the vessel. Obviously, such bars may be positioned at any convenient location on the vessel. The vessel will also have plates such as 55b welded thereto to carry indentification information.

At the top of the vessel the top wall 5 is reinforced by bars 57 fully fillet welded to the top wall of the tank and welded between uprights 57a and rectangular steel plates 56a, 56b, 56c, 56d that are welded to reinforcing members 58 and 59 and to the top wall of the tank. The uprights 57a are welded between cross members 31 and 35, and between cross members 33 and 37. The two cross beams 58 are welded to the top of the plates and joined by additional beams 59. These beams support a removable decking 60 in the region of the valves 11 and 12, so also affording protection to those valves, and a hinged decking 60a directly over the region of the manhole cover 14, so affording protection to that cover yet raisable to give access to the cover 14.

The top ends of the corner uprights 26 to 29 are formed with upwardly projecting lugs 61, on which may be received matching portions on the bottom of a second vessel destined to be stacked on top of the first for storage purposes. Crane points 62 are welded adjacent the top ends of the corner uprights to enable a crane sling to be secured to the vessel. The corner uprights also have welded thereto a number of lashing points 63 to which lashing may be anchored in order to secure the vessel in position on the deck of a ship or oil rig.

The use of full fillet welding between the side, top and bottom walls and their respective reinforcing structures gives sufficient strength to maintain the plates secured to those structures during both overpressure and underpressure within the tank, the structures thus holding the plates against any substantial bowing under either condition. Full fillet welding is not essential to achieve this result and appropriate stitch welding may suffice.

Although the invention is not limited to the use of any specific dimensions it will be useful to describe one specific embodiment of the vessel in accordance therewith. A pressure vessel, designed for a capacity of 2273 litres (500 imperial gallons) has been fabricated from steel plate 8 mm thick, the overall dimensions of the tank being 122.8 cm square with an overall height of 168 cm. The uprights are formed from 10 cm square hollow section steel, and all cross members are vertical reinforcing bars formed from 9 cm square hollow section steel, in all cases 6.3 mm thick. The bottom sections 50, 51 are formed from 25 X 15 cm box section steel, 8 mm thick. The overall dimensions of the vessel were 142.8 cm square and 231 cm in height. A vessel constructed as shown with the aforesaid dimensions has been tested, and has withstood hydrostatic test pressure of 38.5 psi gauge for 30 minutes, well above the 1.724 bar or 25 psi gauge required by the IMDG or IMO Code Type 1.

It will be understood that the description shows only one form in which the vessel may be manufactured, although this form is thought to minimise required floor area without potential instability due to an excess of height. Lower vessels may be manufactured but they will require a greater floor area for a given volume. The reinforcing structures associated with the walls of the vessel may be changed from the specific arrangements shown in the drawings, although any replacement structure must reinforce the wall sufficiently to prevent it bowing under the anticipated pressures. Valve and access arrangements at the top of the tank and discharge arrangements at the bottom of the tank may be changed as desired.

CLAIMS

1. A portable pressure vessel comprising a welded steel tank having four upright substantially planar side walls welded together at adjacent edges, a top wall welded to the side walls at the top thereof and a bottom wall welded to the side walls at the bottom thereof, the tank being devoid of internal reinforcement; a relief valve mounted on the top wall; a discharge valve mounted on the bottom wall and a welded steel frame lying externally of the tank, the frame having a base structure providing a substantially horizontal base plane for the assembly, four uprights each welded to the base structure and extending upwardly therefrom adjacent to the junctions between respective side walls of the tank, top members welded between each adjacent pair of uprights, four side reinforcing structures, one associated with each side wall and each lying between a respective adjacent pair of uprights and being welded to those uprights and to the respective side wall, a top reinforcing structure welded to the top wall of the tank and a bottom reinforcing structure welded to the bottom wall of the tank, the welded connection between each of the side, top and bottom reinforcing structures of the frame and its associated tank wall being capable of withstanding overpressure and underpressure within the tank to prevent substantial bowing of the associated wall under either condition.

2. A portable pressure vessel according to claim 1 in which there is no direct welded connection between the uprights and the side walls of the tank.

3. A vessel according to claim 1 or claim 2 in which each side reinforcing structure comprises upper and lower cross members welded between each adjacent pair of uprights and welded to the respective side wall, together with a number of reinforcing bars welded between each pair of upper and lower cross members and also welded to the respective side wall.

4.   A portable pressure vessel according to claim 3 in which the top reinforcing structure comprises further cross members above and sustantially parallel to upper cross members of the side reinforcing structures and welded between adjacent pairs of uprights, elements at each of two opposite sides of the vessel extending between the further and the upper cross members at that side of the vessel, and a reinforcement arrangement extending over the top wall and welded between said elements and to the top wall.

5.   A portable pressure vessel according to any one of the preceding claims in which the bottom reinforcing structure comprises members welded between the bottom wall of the tank and the base structure of the frame.

6.   A vessel according to any of the preceding claims in which, when the vessel is positioned with the base plane horizontal, the side walls are vertical and the top wall has a first, horizontal section extending from a first side wall towards the opposite side wall and between the other two side walls, and a second section sloping downwardly away from the first section to join said opposite side wall and also extending between said other two side walls.

7.   A vessel according to claim 6 in which a manhole is provided in the second section of the top wall.

8.   A vessel according to any one of the preceding claims in which the  bottom wall is shaped as an inverted truncated pyramid, sloping inwardly and downwardly from each side wall to a centrally mounted discharge valve.

9.   A vessel according to any one of the preceding claims in which the base structure provides entry and lifting points for the tines of a fork lift truck.

10.   A vessel according to any one of the preceding claims in which crane lifting points and safety lashing points are welded to the uprights.

FIG.1.

# FIG.2.

## FIG.3.

## FIG.4.